# FASCICULE DE BREVET EUROPEEN

(11) **EP 0 914 751 B1**
(45) Date de publication et mention de la délivrance du brevet: **26.09.2001**
(21) Numéro de dépôt: 97935622.7
(22) Date de dépôt: 24.07.1997
(51) Int. Cl.: H05B 6/36, F27B 14/06

(54) **FOUR DE FUSION DE VERRE PAR INDUCTION EN CREUSET FROID**
INDUKTIONSOFEN ZUM SCHMELZEN VON GLAS UNTER VERWENDUNG EINES KALTEN TIEGELS
GLASS INDUCTION MELTING FURNACE USING A COLD CRUCIBLE

(30) Priorité: 25.07.1996 FR 9609382
(43) Date de publication de la demande: 12.05.1999
(73) Titulaire: COMMISSARIAT A L'ENERGIE ATOMIQUE, 75015 Paris (FR)
(72) Inventeur: BOEN, Roger, F-30130 Saint-Alexandre (FR); BONNETIER, Armand, F-84100 Orange (FR); LADIRAT, Christian, F-30126 Saint-Laurent-des-Arbres (FR)
(74) Mandataire: Des Termes, Monique
(86) Numéro de dépôt international: FR9701387
(87) Numéro de publication internationale: WO9805185

(56) Documents cités:
- WO-A-92/15531
- DE-C- 564 693
- DE-C- 608 476
- DE-C- 938 263
- DE-C- 3 316 546
- FR-A- 672 026
- GB-A- 2 279 543
- US-A- 1 645 526

## Description

### Domaine de l'invention

La présente invention concerne la fusion de matériaux isolants, tels que le verre, par induction directe en creuset froid.

### Art antérieur et problèmes posés

L'élaboration par fusion de matériaux quelconques s'effectue souvent dans des creusets chauffés par induction. Les creusets les plus répandus et les plus simples sont en matériau réfractaire, mais ce type de creuset n'est pas compatible avec tous les bains de fusion. En effet certains matériaux en fusion sont corrosifs envers les matériaux réfractaires, tandis que d'autres, notamment le verre, sont susceptibles d'être pollués par les matériaux réfractaires.

Ces matériaux doivent alors être élaborés dans des creusets spéciaux dits "froids" dont les parois ne sont pas polluantes. Un creuset froid est constitué de secteurs métalliques refroidis par circulation d'eau, dans lequel le matériau à élaborer est chauffé par un inducteur périphérique. La sectorisation ou partitionnement du creuset sert à limiter l'échauffement par induction de la paroi du creuset et à permettre le chauffage direct par induction du matériau contenu dans le four.

L'inducteur est constitué d'une ou plusieurs spires généralement enroulées autour du creuset, car on admet que l'on obtient de meilleures performances avec cette disposition.

Le brevet allemand DE-C-33 16 546 décrit un four à creuset froid métallique comprenant par ailleurs un inducteur inférieur disposé sous la sole, qui est sectorisée. Toutefois, cet inducteur inférieur ne constitue qu'un élément de chauffage d'appoint. Un inducteur principal est enroulé autour du creuset, ce qui implique que les parois latérales du creuset, métalliques, sont forcément sectorisées aussi.

Le document de brevet britannique N° 2 279 543 décrit un creuset de coulée à parois latérales non sectorisées pour élaborer des alliages métalliques, et non des matériaux isolants, comprenant également un inducteur disposé sous une sole sectorisée. L'inducteur est destiné à déterminer la température de coulée, cette coulée s'effectuant au centre de l'inducteur, mais n'est pas utilisé et n'est pas conçu pour fondre toute la quantité de métal se trouvant dans le creuset. Ce dernier est destiné à être utilisé avec une installation principale qui assure la fusion du métal. L'inducteur constitue donc un élément de chauffage d'appoint. Le chauffage principal peut être prévu par induction, auquel cas, soit on retrouve des parois latérales métalliques sectorisées, ou bien les parois sont réfractaires et présentent les problèmes d'incompatibilité susmentionnés.

Le brevet allemand DE-C-564 693 décrit un four à chauffage par l'intérieur, comprenant des manchons pénétrant dans le bain de fusion par le bas et contenant des spires d'induction. Un tel four est de fabrication complexe, notamment s'il doit être réalisé à parois froides.

De l'état de la technique exposé ci-dessus, on peut déduire qu'un inducteur disposé sous la sole d'un creuset n'a jamais été envisagé comme seul moyen de chauffage.

### Résumé de l'invention

Un objet de la présente invention est de prévoir un four de fusion à creuset froid particulièrement bien adapté au verre, qui soit de constitution particulièrement simple et peu coûteuse tout en garantissant des performances comparables à celles de fours classiques.

Un autre objet de la présente invention est de prévoir un tel four qui, pour une capacité donnée, requiert des composants moins coûteux pour fournir la tension d'excitation de l'inducteur.

Un autre objet de la présente invention est de prévoir un tel four dont la capacité peut être augmentée en utilisant des composants existant dans le commerce pour fournir la tension d'excitation de l'inducteur.

Un autre objet de la présente invention est de prévoir un tel four qui présente une isolation thermique particulièrement bonne entre le bain de fusion et les parois du creuset.

Pour atteindre ces objets, la présente invention prévoit de ne chauffer le verre que par un inducteur disposé sous la sole. Aucun inducteur n'agissant alors à travers la paroi latérale du creuset, cette paroi latérale peut être continue, c'est-à-dire non sectorisée au point de vue électrique, ce qui rend sa fabrication particulièrement simple.

Le diamètre moyen de l'inducteur est près de deux fois inférieur au diamètre d'un inducteur qui serait classiquement enroulé autour du creuset, ce qui réduit notablement son inductance et donc sa tension d'excitation. Les composants fournissant la tension d'excitation peuvent donc être moins coûteux pour un diamètre de creuset donné, ou bien on peut utiliser des composants existants pour réaliser un creuset de diamètre plus grand.

Le fait d'éloigner la périphérie de l'inducteur des parois latérales du creuset permet d'obtenir une épaisse couche de verre solidifié sur ces parois, ce qui diminue les pertes thermiques entre le bain de fusion et le creuset refroidi. Une telle isolation thermique ne peut être obtenue pour les métaux, qui sont bons conducteurs thermiques aussi bien à l'état liquide qu'à l'état solide.

Pour les métaux, les performances d'un tel four sont médiocres par rapport à ce que l'on obtient dans des fours classiques. Par contre, pour les verres, on parvient à optimiser les performances du four par un dimensionnement particulier.

La présente invention prévoit plus particulièrement un four de fusion de matériaux isolants, comprenant un creuset refroidi à paroi latérale métallique, une sole sectorisée et refroidie, et au moins un inducteur disposé sous la sole. Le seul moyen de chauffage est ledit inducteur et la paroi latérale métallique du creuset est continue.

Selon un mode de réalisation de la présente invention, la hauteur du bain de fusion dans le creuset et la fréquence d'excitation de l'inducteur sont choisies de manière que ladite hauteur et le demi-rayon intérieur du creuset soient inférieurs à l'épaisseur de peau dans le bain résultant de la fréquence d'excitation de l'inducteur.

Selon un mode de réalisation de la présente invention, la périphérie de l'inducteur est en retrait par rapport à la paroi latérale du creuset.

Selon un mode de réalisation de la présente invention, la sole est constituée de tubes disposés côte à côte.

Selon un mode de réalisation de la présente invention, les tubes sont en matériau bon conducteur thermique et mauvais conducteur électrique.

Selon un mode de réalisation de la présente invention, le four comprend une base et un toit métalliques qui forment, avec le creuset auquel ils sont reliés, une cage de Faraday protégeant l'environnement extérieur du rayonnement produit par l'inducteur.

Selon un mode de réalisation de la présente invention, le four comprend plusieurs inducteurs répartis sous la sole et commandés indépendamment.

Selon un mode de réalisation de la présente invention, le four est de forme rectangulaire, les inducteurs étant répartis le long du grand axe du rectangle.

### Listes des figures

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, représente un mode de réalisation de four de fusion de verre selon la présente invention ;
la figure 2 représente une première variante de four de fusion selon la présente invention ; et
la figure 3 représente une deuxième variante de four de fusion selon la présente invention.

### Description détaillée de plusieurs réalisations

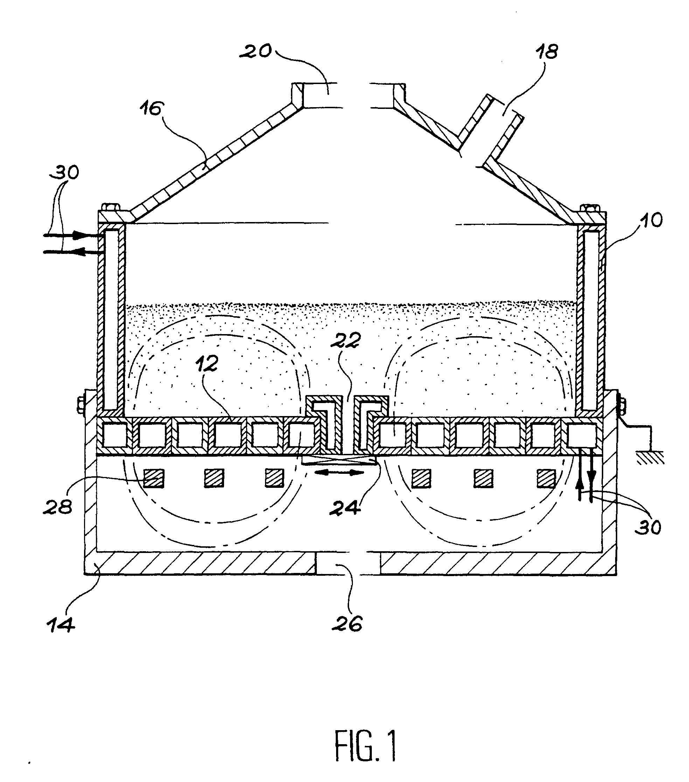

A la figure 1, un mode de réalisation de four de fusion de verre selon l'invention comprend un creuset refroidi constitué d'une virole verticale 10 à double paroi métallique, placée sur une sole horizontale 12 transparente au champ électromagnétique. Cet ensemble est placé, par exemple, sur une base 14 en forme de cuve. Il peut être surmonté d'un toit 16 comportant différents orifices d'accès qui sont un orifice d'entrée de matériaux 18 et une cheminée d'évacuation de gaz de combustion 20. La sole 12 comporte, par exemple, un orifice central de sortie 22 obturé par une trappe escamotable 24. La base 14 comporte alors un orifice de sortie correspondant 26.

Le seul élément de chauffage par induction 28 est placé immédiatement sous la sole 12, à l'intérieur de la cuve 14. Cet élément de chauffage est, dans ce mode de réalisation, un inducteur à une ou plusieurs spires.

La virole verticale 10 et la sole 12 sont conçues, chacune, pour permettre la circulation d'un liquide de refroidissement, ce qui est indiqué par des conduites 30 représentées de façon schématique. La virole comporte une paroi interne et une paroi externe continues entre lesquelles circule le liquide de refroidissement. Pour homogénéiser le refroidissement, on pourra prévoir des chicanes entre les deux parois.

Une telle virole 10 est particulièrement simple et peu coûteuse à construire par rapport à une virole sectorisée, pour laquelle des secteurs de forme relativement complexe (trapézoïdale) devaient être fabriqués préalablement puis assemblés les uns aux autres de manière étanche et avec isolation électrique.

L'inducteur 28 génère un champ, indiqué par des lignes en trait mixte, qui traversent la sole 12.

Seule la sole 12 est sectorisée. Comme on le verra plus en détail ci-après, réaliser un partitionnement de la sole est beaucoup plus simple que de sectoriser les parois latérales d'un creuset.

Le diamètre extérieur de l'inducteur 28 est inférieur au diamètre interne de la virole 10 pour que le champ électromagnétique soit faible au niveau de la virole 10. Il en résulte une diminution de la température à proximité de la paroi de la virole et un épaississement de la couche de verre solidifié sur cette paroi. Le verre solide étant un bon isolant thermique, on réduit notablement les pertes énergétiques. On remarquera que cet avantage ne peut être obtenu pour les métaux qui sont bons conducteurs thermiques quelle que soit leur phase.

Le diamètre moyen de l'inducteur est près de deux fois inférieur au diamètre d'un inducteur classique enroulé autour du creuset, ce qui réduit notablement son inductance et donc sa tension d'excitation pour transmettre une énergie donnée. Ceci est particulièrement avantageux, notamment dans le cas du verre, car la fréquence de la tension d'excitation est alors particulièrement élevée. Ainsi, pour un diamètre de four donné, on peut utiliser, dans le convertisseur fournissant la tension d'excitation de l'inducteur, des composants dont la tension de claquage est plus faible que dans le cas d'un four classique. Par ailleurs, avec des composants existants, le diamètre du four pourra être plus grand que celui d'un four classique.

On remarquera que pour les métaux l'augmentation du diamètre du four ne pose pas de problème particulier de choix de composants, car la fréquence d'excitation de l'inducteur est beaucoup plus faible que pour le verre.

Dans un four à induction pour un matériau quelconque, on cherche à obtenir un bon rendement thermique. En raison de l'effet de peau, l'énergie induite est maximale dans le bain de fusion à proximité de l'inducteur et décroît rapidement. Elle devient faible au-delà d'une distance appelée épaisseur de peau qui, pour un matériau donné, ne dépend que de la fréquence d'excitation. L'épaisseur de peau diminue lorsque la fréquence augmente.

Ainsi, l'énergie concentrée par effet de peau doit être transmise au reste du bain par conduction et convection. On a donc intérêt à augmenter l'épaisseur de peau pour favoriser l'homogénéité thermique du bain. Par contre, le rendement électrique diminue lorsque l'épaisseur de peau augmente. Ainsi, on cherche à trouver un compromis entre l'homogénéité du chauffage et le rendement électrique.

Les bains de métal sont généralement fluides et ont une bonne conductivité thermique, ce qui favorise l'homogénéisation par conduction et convection. Dans un four classique à inducteur enroulé autour du creuset, on obtient un bon compromis lorsque l'épaisseur de peau est inférieure au quart du rayon intérieur du creuset de fusion pour favoriser le rendement électrique.

Les bains de verre sont généralement visqueux et ont une mauvaise conductivité thermique, ce qui rend difficile l'homogénéisation. On doit choisir une épaisseur de peau relativement importante. Dans un four classique, un bon compromis est obtenu lorsque l'épaisseur de peau est proche du rayon intérieur du creuset. La perte de rendement électrique provenant du choix d'une épaisseur de peau importante est compensée, par rapport au rendement électrique obtenu pour les bains de métal, par le fait que le verre fondu présente une résistivité beaucoup plus importante qu'un métal. En effet, le rendement électrique croît avec la résistivité du bain de fusion.

Lorsque l'on utilise un inducteur placé sous la sole, comme à la figure 1, l'effet de peau ne se produit en fait pas à partir de la paroi de la virole 10, mais à partir de la sole 12. Pour conserver les compromis susmentionnés, il s'avère que la fréquence d'excitation de l'inducteur 28 peut être choisie de manière que l'épaisseur de peau soit égale à la moitié de celle choisie lorsque l'inducteur est enroulé autour du creuset. Donc, pour les métaux, l'épaisseur de peau serait choisie égale au huitième du rayon intérieur du creuset, tandis que pour les verres, elle serait choisie égale au demi-rayon.

Ainsi, le fait de placer l'inducteur 28 sous le bain de fusion permet de diminuer de moitié l'épaisseur de peau tout en conservant l'homogénéité thermique souhaitée. La diminution de l'épaisseur de peau tend à augmenter le rendement électrique.

Toutefois, on s'aperçoit que le rendement thermique est inférieur à celui d'un four classique à inducteur enroulé autour du creuset si on ne prend pas de précautions particulières. Les inventeurs se sont aperçus que le rendement variait en fonction de la hauteur du bain de fusion et que le rendement optimal était obtenu pour une hauteur du bain inférieure ou égale à l'épaisseur de peau.

Si on veut conserver les compromis habituels, pour les métaux, il faudrait donc choisir une hauteur de bain inférieure au huitième du rayon intérieur du creuset. Ceci conduirait à des proportions de four déraisonnables. Les fours à seul chauffage par le bas ne conviennent donc pas aux métaux.

Par contre, pour le verre, et selon la présente invention, la hauteur du bain est inférieure à la moitié du rayon, ce qui conduit à des proportions de four raisonnables. A titre indicatif, la figure 1 respecte sensiblement les proportions permettant d'obtenir le rendement thermique optimal dans un four de fusion de verre.

Un four selon l'invention présente moins de pertes thermiques qu'un four à verre classique de même capacité. En effet, la couche de verre solidifié sur les parois latérales est beaucoup plus épaisse que dans un four classique, car il n'y a pas de source de chauffage près des parois latérales. Des pertes relativement importantes subsistent au niveau de la sole, mais elles sont inévitables car, dans un four selon l'invention comme dans un four classique, le fond du bain doit être chaud pour permettre la coulée du verre fondu dans de bonnes conditions.

Selon un mode de réalisation avantageux, la sole 12, afin de la rendre transparente au champ magnétique, est constituée de tubes disposés horizontalement les uns à côté des autres et isolés les uns des autres. Comme cela est représenté, les tubes sont de préférence de section carrée, ce qui permet de réaliser un fond de creuset plat.

Un problème que l'on rencontre pour réaliser des parois verticales sectorisées de creuset est de fixer les secteurs les uns aux autres tout en assurant l'étanchéité et l'isolation électrique entre secteurs. Dans le cas de la sole 12, ce problème est facilement résolu, par exemple, en noyant partiellement les tubes 12 dans du béton, les tubes ayant été légèrement séparés pour permettre au béton d'assurer l'isolation entre les tubes. L'inducteur 28 pourra également être noyé dans le béton dans la même opération.

Les tubes pourront avantageusement être en un matériau fortement conducteur thermique et faiblement conducteur électrique, tel que le carbure de silicium. Si on utilise un tel matériau, il n'est en principe pas nécessaire de partitionner la sole, celle-ci pouvant alors être constituée de deux plaques entre lesquelles circule le liquide de refroidissement. Toutefois, ces matériaux ne se brasent ou ne se soudent pas, ce qui rend difficile de réaliser des assemblages étanches, notamment des assemblages d'angle. Par contre, il est toujours facile de prévoir un assemblage étanche à l'extrémité d'un tube. De tels assemblages d'extrémité serviront à relier en "S" les tubes constituant la sole 12 afin d'y créer la circulation de liquide de refroidissement.

De préférence, le toit 16 et la cuve 14 sont en un matériau conducteur électrique, ce qui constitue une cage de Faraday protégeant l'environnement extérieur du rayonnement magnétique produit par l'inducteur 28.

Aucun inducteur n'étant enroulé autour d'un creuset selon l'invention, la forme des creusets peut être quelconque. Elle est de préférence cylindrique pour l'emploi d'un seul inducteur, ce qui simplifie sa fabrication. Mais sa forme peut être adaptée à une disposition particulière de plusieurs inducteurs dans le but d'accroître la capacité du four ou d'assurer un traitement particulier. Dans ce cas, pour le choix de la hauteur de bain et de la fréquence d'excitation, on considère le rayon correspondant à la circonférence moyenne de la zone couverte par chaque inducteur.

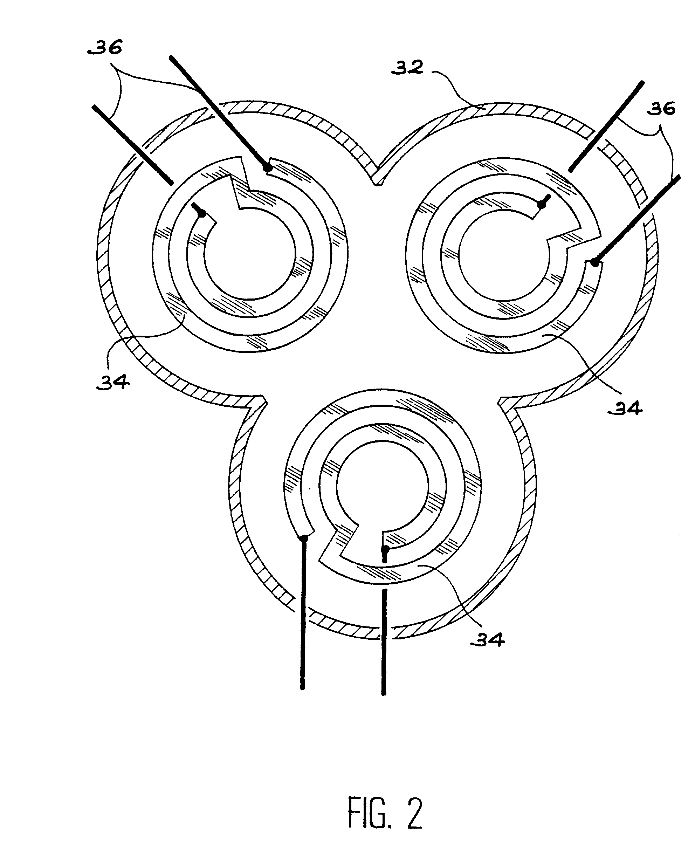

La figure 2 illustre un premier exemple de four à plusieurs inducteurs selon la présente invention. Le creuset 32 du four a une section formée d'une association de trois cylindres dont chacun comporte en son fond un inducteur en spirale 34 alimenté par deux conducteurs 36. On peut concevoir ainsi un four de grande capacité, ou bien à plusieurs zones dont les températures sont contrôlées de façon indépendante, ce qui permet, par exemple, d'obtenir des températures d'élaboration et de coulée différentes.

Dans le cas de la fusion du verre, un tel four facilite les opérations d'affinage.

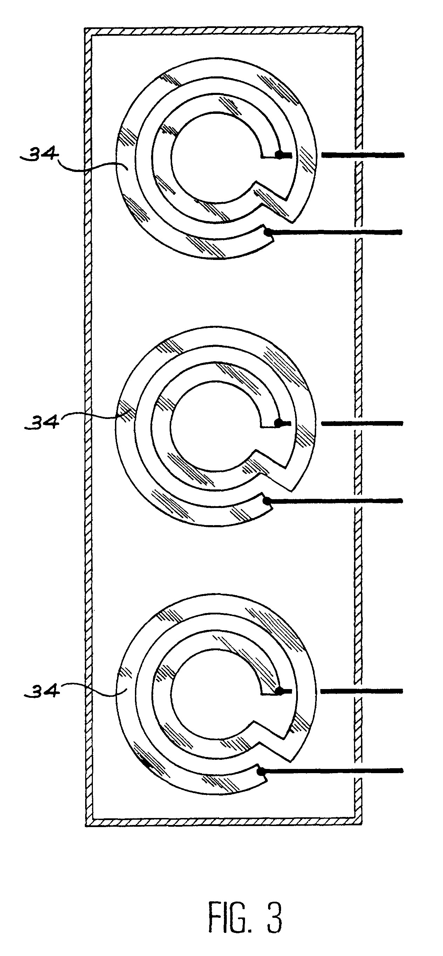

La figure 3 illustre un deuxième exemple de four selon l'invention plus particulièrement adapté à l'affinage du verre. Le four est de forme rectangulaire et les inducteurs 34, commandés de façon indépendante, sont disposés le long du grand axe du rectangle. L'un des inducteurs extrêmes, celui au niveau duquel on versera le verre à fondre, sera excité pour fournir l'énergie la plus élevée, tandis que les autres inducteurs seront excités pour fournir des énergies décroissantes, le verre affiné étant prélevé au niveau de l'inducteur le moins excité.

Cette configuration de four se rapproche idéalement de celle des fours de verrier classiques chauffés à la flamme.

Dans les fours à inducteurs multiples susmentionnés, les inducteurs doivent être suffisamment rapprochés pour assurer une action homogène, mais suffisamment écartés pour ne pas interagir les uns sur les autres.

De nombreuses variantes et modifications de la présente invention apparaîtront à l'homme du métier. Bien que les applications décrites concernent le verre, il est clair qu'un four selon l'invention s'applique à tout matériau de faible conductivité électrique et thermique à l'état liquide.

## Revendications

1. Four de fusion de matériaux isolants, comprenant un creuset refroidi (10, 32) à paroi latérale métallique, une sole (12) sectorisée et refroidie, et au moins un inducteur (28, 34) disposé sous la sole ; **caractérisé en ce que** le seul moyen de chauffage est ledit au moins un inducteur et en ce que la paroi latérale métallique du creuset est continue.

2. Four de fusion selon la revendication 1, **caractérisé en ce que** la hauteur du bain de fusion dans le creuset (10, 32) et la fréquence d'excitation de l'inducteur (28, 34) sont choisies de manière que ladite hauteur et le demi-rayon intérieur du creuset soient inférieurs à l'épaisseur de peau dans le bain résultant de la fréquence d'excitation de l'inducteur (28, 34).

3. Four de fusion selon la revendication 1, **caractérisé en ce que** la périphérie de l'inducteur (28, 34) est en retrait par rapport à la paroi latérale du creuset (10, 32).

4. Four de fusion selon la revendication 1, **caractérisé en ce que** la sole (12) est constituée de tubes disposés côte à côte.

5. Four de fusion selon la revendication 4, **caractérisé en ce que** les tubes sont en matériau bon conducteur thermique et mauvais conducteur électrique.

6. Four de fusion selon la revendication 1, **caractérisé en ce qu'**il comprend une base (14) et un toit (16) métalliques qui forment, avec le creuset (10, 32) auquel ils sont reliés, une cage de Faraday protégeant l'environnement extérieur du rayonnement produit par l'inducteur (28, 34).

7. Four de fusion selon la revendication 1, **caractérisé en ce qu'**il comprend plusieurs inducteurs (34) répartis sous la sole et commandés indépendamment.

8. Four de fusion selon la revendication 7, **caractérisé en ce qu'**il est de forme rectangulaire, les inducteurs (34) étant répartis le long du grand axe du rectangle.

## Patentansprüche

1. Ofen zum Schmelzen von Isolationsmaterialien, einen gekühlten Tiegel (10, 32) mit metallischer Seitenwand, eine sektorisierte und gekühlte Sohle (12) und wenigstens einen unter der Sohle angeordneten Induktor (28, 34) umfassend;
**dadurch gekennzeichnet, dass** die einzige Heizeinrichtung wenigstens der genannte eine Induktor ist, und dadurch, dass die metallische Seitenwand des Tiegels durchgehend ist.

2. Schmelzofen nach Anspruch 1, **dadurch gekennzeichnet, dass** die Höhe des Schmelzbades in dem Tiegel (10, 32) und die Erregerfrequenz des Induktors (28, 34) so gewählt wird, dass die genannte Höhe und der Innenhalbradius des Tiegels kleiner sind als die Hautdicke in dem Bad, resultierend aus der Erregerfrequenz des Induktors (28, 34).

3. Schmelzofen nach Anspruch 1, **dadurch gekennzeichnet, dass** die Peripherie des Induktors in Bezug auf die Seitenwand des Tiegels (10, 32) zurückversetzt ist.

4. Schmelzofen nach Anspruch 1, **dadurch gekennzeichnet, dass** die Sohle (12) durch Seite an Seite angeordnete Rohre gebildet wird.

5. Schmelzofen nach Anspruch 4, **dadurch gekennzeichnet, dass** die Rohre aus einem Material sind, das die Wärme gut und den elektrischen Strom schlecht leitet.

6. Schmelzofen nach Anspruch 1, **dadurch gekennzeichnet, dass** er einen Boden (14) und ein Dach (16) aus Metall umfasst, die zusammen mit dem Tiegel (10, 32), mit dem sie verbunden sind, einen Faraday-Käfig bilden, der die Außenumgebung vor den durch den Induktor erzeugten Strahlen schützt.

7. Schmelzofen nach Anspruch 1, **dadurch gekennzeichnet, dass** er mehrere unter der Sohle verteilte und unabhängig gesteuerte Induktoren (34) umfasst.

8. Schmelzofen nach Anspruch 7, **dadurch gekennzeichnet, dass** er eine rechteckige Form aufweist und die Induktoren längs der Hauptachse des Rechtecks verteilt sind.

## Claims

1. Melting furnace for insulating materials, comprising a cooled crucible (10, 32) with metal side walls, a partitioned and cooled bottom (12) and at least one induction coil (28, 34) placed under the bottom; **characterized in that** the only means of heating is said one or more induction coils, and that the metal side wall of the crucible is continuous.

2. Melting furnace according to claim 1, **characterized in that** the depth of the melting bath in the crucible (10, 32) and the excitation frequency of the induction coil (28, 34) are chosen such that said depth and half inside radius of the crucible are less than the skin thickness in the bath resulting from the excitation frequency of the induction coil (28, 34).

3. Melting furnace according to claim 1, **characterized in that** the periphery of the induction coil (28, 34) is set back from the side wall of the crucible (10, 32).

4. Melting furnace according to claim 1, **characterized in that** the bottom (12) is composed of tubes placed side by side.

5. Melting furnace according to claim 4, **characterized in that** the tubes are made of a material that is a good conductor of heat and a bad conductor of electricity.

6. Melting furnace according to claim 1, **characterized in that** it comprises a metal base (14) and a metal lid (16) which, together with the crucible (10, 32) to which they are connected, form a Faraday cage protecting the outside environment from radiation generated by the induction coil (28, 34).

7. Melting furnace according to claim 1, **characterized in that** it comprises several induction coils (34) distributed under the bottom and controlled independently.

8. Melting furnace according to claim 7, **characterized in that** its shape is rectangular, the induction coils (34) being distributed along the long axis of the rectangle.
